# EUROPEAN PATENT APPLICATION

(11) **EP 4 645 056 A1**
(43) Date of publication of application: **05.11.2025**
(21) Application number: 25173131.1
(22) Date of filing: 29.04.2025
(51) Int. Cl.: G06F 3/06

(54) **SYSTEMS, METHODS, AND APPARATUS FOR DATA MODIFICATION WITH STORAGE DEVICE USING MEMORY ACCESS TECHNIQUE**

(30) Priority: 30.04.2024 US 202463640880 P; 21.04.2025 US 202519185170
(71) Applicant: Samsung Electronics Co., Ltd., Suwon-si, Gyeonggi-do 16677 (KR)
(72) Inventor: PARK, Heekwon, San Jose, CA, 95134 (US); GIM, Jongmin, San Jose, CA, 95134 (US); JUNG, Jaemin, San Jose, CA, 95134 (US); CHOI, Changho, San Jose, CA, 95134 (US); KI, Yang Seok, San Jose, CA, 95134 (US)
(74) Representative: Kuhnen & Wacker Patent- und Rechtsanwaltsbüro PartG mbB

(57) **Abstract**

A method may include operating, by at least one processor, a data structure, receiving, by the at least one processor, from a storage device, using a memory access technique, information for a modification operation for the data structure, and performing, by the at least one processor, using the information, at least a portion of the modification operation. A system may include a storage device, and a host comprising at least one processor configured to operate a data structure, receive, from the storage device, using a memory access technique, information for a modification operation for the data structure, and perform, using the information, at least a portion of the modification operation. A device may include a storage medium, a memory, and a device controller configured to receive, using a memory access technique, information for a modification operation for a data structure and perform at least a portion of the modification operation.

## Description

### TECHNICAL FIELD

This disclosure relates generally to data modification, and more specifically to systems, methods, and apparatus for data modification with a storage device using a memory access technique.

### BACKGROUND

Some data structures may include invalid data that may consume memory and/or storage space. Some processing systems may perform a cleaning operation to reduce the amount of space occupied by invalid data in a data structure. For example, a processing system may perform a cleaning operation to merge valid data from one or more portions of the data structure into a more compact form.

The above information disclosed in this Background section is only for enhancement of understanding of the background of the inventive principles and therefore it may contain information that does not constitute prior art.

### SUMMARY

A method may include operating, by at least one processor, a data structure, receiving, by the at least one processor, from a storage device, using a memory access technique, information for a modification operation for the data structure, and performing, by the at least one processor, using the information, at least a portion of the modification operation. The modification operation may include a cleaning operation. The information may include one or more blocks of data, and the performing may include merging a first portion of the one or more blocks of data and a second portion of the one or more blocks of data. The information may include location information about one or more blocks of data. The information may include first information about one or more first blocks of data, and the performing may include determining, based on the first information, second information for one or more second blocks of data. The performing may include generating a result, and transferring at least a portion of the result to the storage device. The method may further include sending, from the at least one processor to the storage device, a fetch request, and loading, at the storage device, based on the fetch request, at least a portion of the information from a storage medium to a memory.

A method may include operating, by at least one processor, a data structure, sending, from the at least one processor, to a storage device, information for a modification operation for the data structure, and performing, by the storage device, using the information, at least a portion of the modification operation. The modification operation may include a cleaning operation. The information for the modification operation may include at least one of location information, data size information, or valid data information. The data structure may include one or more blocks of data, and the performing at least a portion of the modification operation may include merging a first portion of the one or more blocks of data and a second portion of the one or more blocks of data. The information may include first information about one or more blocks of data, and the method may further include sending, from the storage device to the at least one processor, second information about one or more blocks of data, and generating, by the at least one processor, based on the second information, the first information. The information may include destination information for one or more blocks of merged data, and the method may further include sending, from the storage device to the at least one processor, source information for one or more blocks of data stored at the storage device, and generating, by the at least one processor, based on the source information, the destination information. The data structure may include one or more blocks of data, and the method may further include sending, from the at least one processor to the storage device, a fetch request, loading, at the storage device, based on the fetch request, from a storage medium to a memory, at least a portion of the one or more blocks of data, and performing the at least a portion of the modification operation on the at least a portion of the one or more blocks of data in the memory.

A method may include operating, by a processor at a host, a data structure, storing, by the processor, in a memory at the host, based on a status of a portion of the data structure, the portion of the data structure, receiving, by the processor, from a storage device, information for a modification operation for the data structure, and performing, by the processor, using the information and the portion of the data structure, at least a portion of the modification operation. The status may be based on an access of the portion of the data structure. The modification operation may include a cleaning operation. The performing the at least a portion of the modification operation may include merging the portion of the data structure and the information. The performing the at least a portion of the modification operation may include generating a result, the method further comprising storing at least a portion of the result in the memory at the host. The performing the at least a portion of the modification operation may include generating a result, the method further comprising sending at least a portion of the result to the storage device.

A system may include a storage device, and a host comprising at least one processor configured to operate a data structure, receive, from the storage device, using a memory access technique, information for a modification operation for the data structure, and perform, using the information, at least a portion of the modification operation. The information may include first information about one or more blocks of data at the storage device, the at least one processor may be configured to generate, based on the first information, second information about one or more blocks of data at the storage device, and send, to the storage device, the second information, and the storage device may be configured to perform, based on the second information, at least a portion of the modification operation. The host may include a memory, and the at least one processor may be configured to store, in the memory, based on a status of a portion of the data structure, the portion of the data structure, and perform, using the information and the portion of the data structure, the at least a portion of the modification operation.

An apparatus may include a device including a storage medium, a memory, and a device controller configured to receive, using a memory access technique, information for a modification operation for a data structure comprising one or more blocks of data stored in the memory, and perform, based on the information for the modification operation, using at least a portion of the one or more blocks of data, at least a portion of the modification operation. The device controller may be configured to receive a fetch request, and load, based on the fetch request, from the storage medium, to the memory, at least a portion of the one or more blocks of data. The information for the modification operation may include, for at least a portion of the one or more blocks of data, at least one of a location, a size, or valid data information.

### BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.
Fig. 1 illustrates an embodiment of a processing system that may implement a cleaning scheme for a data structure in accordance with example embodiments of the disclosure.
Fig. 2 illustrates an embodiment of a system having a host and a device that may implement a cleaning scheme for a data structure in accordance with example embodiments of the disclosure.
Fig. 3 illustrates an embodiment of a communication scheme having two access modes that may be used for a cleaning scheme for a data structure in accordance with example embodiments of the disclosure.
Fig. 4 illustrates some example implementation details for embodiment of a communication scheme having two access modes that may be used for a cleaning scheme for a data structure in accordance with example embodiments of the disclosure.
Fig. 5 illustrates an embodiment of a cleaning scheme for a data structure using a memory access technique in accordance with example embodiments of the disclosure.
Fig. 6 illustrates an embodiment of a cleaning scheme for a data structure using a copy operation to perform a portion of a cleaning operation at a storage device in accordance with example embodiments of the disclosure.
Fig. 7 illustrates an embodiment of a cleaning scheme for a data structure that may perform a merge operation based on a status of a portion of the data structure stored in a memory in accordance with example embodiments of the disclosure.
Fig. 8 illustrates some example implementation details for a second embodiment of a cleaning scheme using a memory access technique in accordance with example embodiments of the disclosure.
Fig. 9 illustrates some example implementation details for a second embodiment of a cleaning scheme for a data structure using a copy operation to perform a portion of a cleaning operation at a storage device in accordance with example embodiments of the disclosure.
Fig. 10 illustrates some example implementation details for a second embodiment of a cleaning scheme for a data structure that may perform a merge operation based on a status of a portion of the data structure stored in a memory in accordance with example embodiments of the disclosure.
Fig. 11 illustrates an embodiment of a method to implement a cleaning operation using a memory access technique in accordance with example embodiments of the disclosure.

### DETAILED DESCRIPTION

Data structures may be used to organize and/or manage operations within a data processing system. For example, a file system may use a data structure to track of the locations of files throughout a data storage system. The file system may update the data structure to reflect changes to the locations of files.

Some data structures may be updated by adding valid (e.g., new) data to an unoccupied portion of memory and/or storage space. This may cause the data structure to contain invalid (e.g., old) data that may consume additional memory and/or storage space. To reduce the amount of space occupied by invalid data, a processing system may perform a cleaning operation in which valid data from one or more portions of the data structure may be merged into a more compact form. However, a cleaning operation may increase memory usage, increase memory traffic, reduce data access time (e.g., by evicting frequently used data from a cache), increase input and/or output (I/O or IO) operations, increase power consumption, and/or the like.

Some processing systems in accordance with example embodiments of the disclosure may use a memory access technique to access, from a storage device, information for a data modification operation (e.g., a cleaning operation) for a data structure. For example, a memory access technique may enable a host processor to load (e.g., directly) one or more blocks containing valid and/or invalid data from a storage device. The host processor may merge valid data from the one or more blocks into a more compact form which the host processor may send (possibly using the memory access technique) to the storage device.

As another example, in some embodiments, a memory access technique may enable a host processor to load (e.g., directly) metadata (e.g., location information) for one or more blocks containing valid and/or invalid data stored at a storage device. Depending on the implementation details, the use of a memory access technique to access a storage device may reduce memory usage, IO operations, power consumption, and/or the like.

Additionally, or alternatively, in some processing systems in accordance with example embodiments of the disclosure, one or more copy operations for a data modification operation (e.g., a cleaning operation) for a data structure may be performed at a storage device. For example, a host processor may receive first metadata (e.g., location information) for one or more blocks containing valid and/or invalid data stored at a storage device. The host processor may process the metadata to generate second metadata which the storage device may use to determine how to copy valid data from the one or more blocks into a more compact form (e.g., a smaller number of blocks). Depending on the implementation details, performing a copy operation for a data modification operation at a storage device may reduce memory usage, IO operations, power consumption, and/or the like.

Additionally, or alternatively, in some processing systems in accordance with example embodiments of the disclosure, at least a portion of a data structure may be stored in a host memory for a data modification operation based on a status of the portion of the data structure. For example, one or more blocks containing relatively frequently accessed valid data may be stored in a host memory. A host processor may merge the relatively frequently accessed valid data in the host memory (possibly with valid data stored at one or more other locations) into a more compact form. In some embodiments, the valid data in the more compact form may be stored in the host memory. Depending on the implementation details, storing a portion of a data structure in a host memory based on a status of the portion may reduce access time, IO operations, power consumption, and/or the like.

This disclosure encompasses numerous aspects relating data modification with storage devices using memory access techniques. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

For purposes of illustration, some embodiments may be described in the context of some specific implementation details such as specific interfaces, communication techniques, protocols, and/or the like. However, the aspects of the disclosure are not limited to these or any other implementation details. For example, some embodiments may be described in the context of cleaning operations, but the disclosed aspects may also be applied to other types of data modification operations.

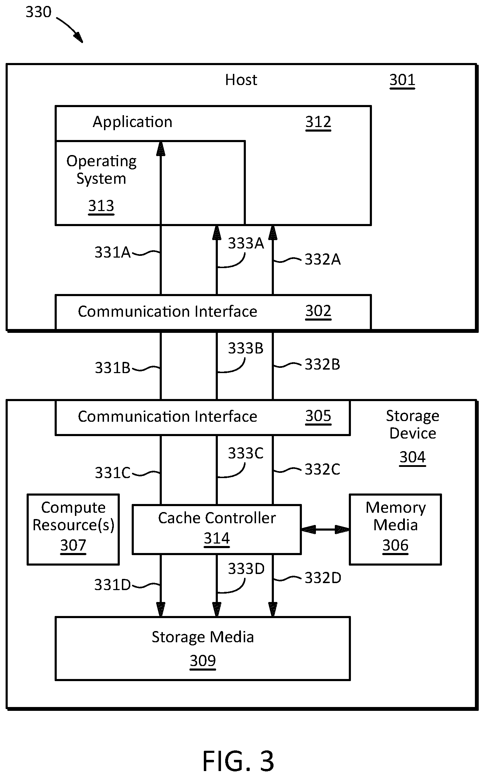

In some example embodiments described herein, reference indicators having a base portion and a suffix portion may be referred to collectively and/or individually by the base portion. For example, referring to Fig. 3, segments 331A, 331B, ... may be referred to individually and/or collectively as 331. In some example embodiments described herein, multiple figures having the same numbers with different letter suffixes may be referred to collectively and/or individually by the number. In some example embodiments described herein, single or multiple instances of an element may be referred to collectively and/or individually as "a" and/or "the." For example, one or more hosts may be referred to as the host or a host. Similarly, one or more devices may be referred to as the device or a device.

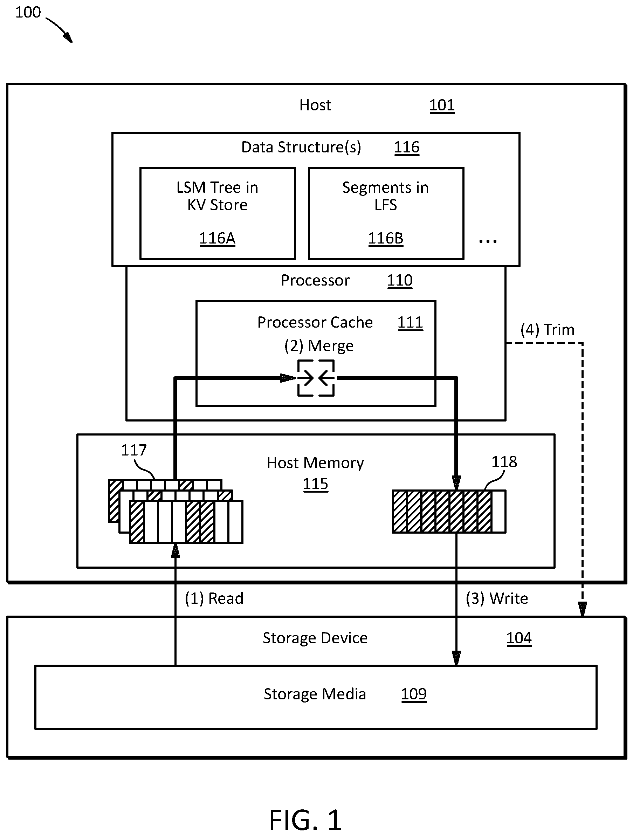

Fig. 1 illustrates an embodiment of a processing system that may implement a cleaning scheme for a data structure in accordance with example embodiments of the disclosure. The scheme 100 illustrated in Fig. 1 may include a host 101 and a storage device 104. The host 101 may include a processor 110 and a memory 115. The processor 110 may include one or more processor caches 111 and may be used to implement one or more data structures 116. The storage device 104 may include storage media 109. The processor 110 may be implemented, for example, with a central processing unit (CPU), graphics processing unit (GPU), data processing unit (DPU), neural processing unit (NPU), tensor processing unit (TPU), and/or the like.

Some examples of data structures 116 may include a log-structured merge (LSM) tree in a key-value (KV) store 116A, segments in a log-structured file system (LFS) 116B, a b+tree, and/or the like. An LSM tree may maintain data in pairs (e.g., key-value pairs) by appending new data to one or more tables. Thus, a table may contain invalid data based on an update. An LFS may write modifications to a storage device sequentially in a log structure. The log may be implemented in segments that may eventually include data that becomes invalid as files are updated. A b+ tree may store copies of keys in nodes that may include pointers to other nodes. To update a b+ tree with new data, a node may be added. This, however, may result in some nodes having invalid data.

Some data structures 116 such as an LSM tree, segments in an LFS, a b+ tree (e.g., an append-only b+tree), and/or the like, may be updated by storing valid (e.g., new) data to an unoccupied portion of memory and/or storage space in which the data structure may be stored. In some embodiments, this may be in addition to, or an alternative to, read-modify-write operations in which a portion of a data structure may be updated by reading the portion from a location in the data structure, modifying the portion, and/or writing the modified portion back to the location.

In a data structure 116 that may be updated by storing valid (e.g., new) data to an unoccupied portion of memory and/or storage space, the data structure may contain invalid (e.g., old) data that may consume additional memory and/or storage space. To reduce the amount of space occupied by invalid data, the scheme 100 may perform a cleaning operation in which valid data from one or more portions of the data structure may be merged into a more compact form as illustrated in Fig. 1.

The cleaning operation may include a read operation (1), a merge operation (2), a write operation (3), and/or a trim operation (4). In read operation (1), one or more old segments 117 (which may also be referred to as existing segments) of a data structure 116 may be read from the storage medium 109 at storage device 104 and transferred to a memory 115 at host 101. One or more (e.g., each) of the old segments 117 may include various portions of valid data (indicated by diagonal shading) and/or invalid data (indicated without shading).

In merge operation (2), a processor 110 may load one or more (e.g., each) of the old segments 117 (or a portion of valid data therein) from the memory 115 into one or more processor caches 111. The processor 110 may combine one or more (e.g., each) of the portions of valid data into one or more new segments 118 (which may also be referred to as merged segments) in which valid data may be indicated by diagonal shading, and/or invalid data may be indicated without shading. In many situations, the amount of space (e.g., the number of new segments 118) into which the portions of valid data may be combined may be smaller than the amount of space occupied by the old segments 117.

In the write operation (3), one or more (e.g., each) of the new segments 118 may be written from host memory 115 to storage medium 109 at storage device 104.

In trim operation (4), the processor 110 may send one or more commands to the storage device 104 to trim (e.g., delete) one or more (e.g., each) of the old segments 117. Storage space freed by a trim operation may be used, for example, to store additional new segments 118 that may be generated by other cleaning operations.

Although the cleaning scheme 100 may reduce the amount of space used by a data structure by reducing the amount of invalid data stored in storage media 109, it may increase the amount of memory 115 (e.g., overhead) used to perform cleaning operations for a data structure 116, thereby reducing the amount of memory 115 available for other purposes. Moreover, using memory 115 to store one or more old segments 117 and/or new segments 118 may increase data access times by reducing the amount of memory 115 available to store frequently and/or recently accessed data (which may be referred to as hot data). For example, hot data stored in memory 115 may be evicted to store one or more old segments 117 and/or new segments 118 for a cleaning operation, thereby causing the processor to access the hot data from storage device 104.

Additionally, or alternatively, the cleaning scheme 100 may increase memory bus traffic for the memory 115, IO operations between the host 101 and the storage device 104, power consumption associated with any such operations, and/or the like.

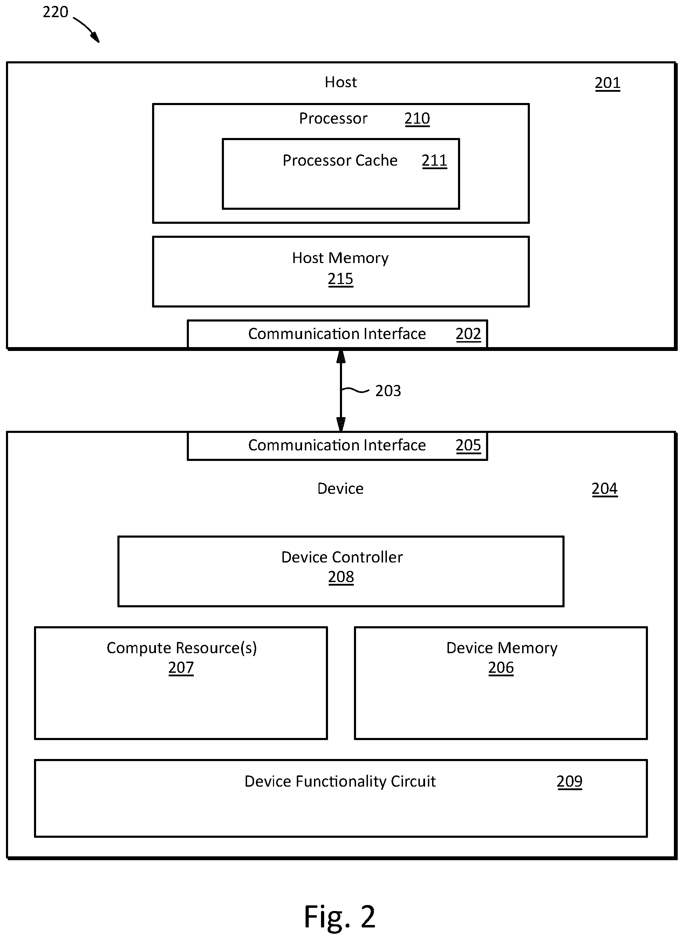

Fig. 2 illustrates an embodiment of a system having a host and a device that may implement a cleaning scheme for a data structure in accordance with example embodiments of the disclosure. The system 220 illustrated in Fig. 2 may be used to implement any of the cleaning schemes disclosed herein, including the cleaning scheme 100 illustrated in Fig. 1 in which similar elements may be indicated by reference numbers ending in, and/or containing, the same digits, letters, and/or the like.

Referring to Fig. 2, the system 220 may include one or more hosts 201 and one or more devices 204 configured to communicate using one or more communication connections 203. A host 201 may be implemented with any component or combination of components that may utilize one or more features of device 204. For example, a host may be implemented with one or more of a server, a storage node, a compute node, a workstation, a personal computer, a tablet computer, a smartphone, and/or the like, or multiples and/or combinations thereof. In some embodiments, the host 201 may implement a data structure such as segments in an LFS, an LSM tree in a database, and/or the like, that may be updated by storing valid data to an unoccupied portion of memory and/or storage space in which the data structure may be stored. In such an embodiment, the host 201 may implement a cleaning scheme for the data structure such as any of the cleaning schemes disclosed herein.

A device 204 may include a communication interface 205, memory 206 (some or all of which may be referred to as device memory), a device controller 208, and/or a device functionality circuit 209. The device controller 208 may control the overall operation of the device 204 including any of the operations, features, and/or the like, described herein. For example, in some embodiments, the device controller 208 may parse, process, invoke, and/or the like, commands received from the host 201. In some embodiments, a device 204 may include one or more compute resources 207 (which may also be referred to as computational resources).

The device functionality circuit 209 may include any hardware to implement the primary function of the device 204. For example, if the device 204 is implemented at least partially as a storage device, the device functionality circuit 209 may include storage media such as magnetic media (e.g., if the device 204 is implemented as a hard disk drive (HDD) or a tape drive), solid state media (e.g., one or more flash memory devices), optical media, and/or the like. For instance, in some embodiments, a storage device may be implemented at least partially as a solid state drive (SSD) based on not-AND (NAND) flash memory, persistent memory (PMEM) such as cross-gridded nonvolatile memory, memory with bulk resistance change, phase change memory (PCM), or any combination thereof. In an embodiment in which the device 204 is implemented as a storage device, the device controller 208 may include a media translation layer such as a flash translation layer (FTL) for interfacing with one or more flash memory devices.

As another example, if the device 204 is implemented as a network interface controller (NIC), the device functionality circuit 209 may include one or more modems, network interfaces, physical layers (PHYs), medium access control layers (MACs), and/or the like. As a further example, if the device 204 is implemented as an accelerator, the device functionality circuit 209 may include one or more accelerator circuits, memory circuits, and/or the like. In such an embodiment, one or more compute resources 207, if any, may be implemented at least partially with the device functionality circuit 209.

The compute resources 207, if any, may be implemented with any component or combination of components that may perform operations on data that may be received, stored, and/or generated at the device 204. Examples of compute engines may include combinational logic, sequential logic, timers, counters, registers, state machines, complex programmable logic devices (CPLDs), field programmable gate arrays (FPGAs), application specific integrated circuits (ASICs), embedded processors, microcontrollers, central processing units (CPUs) such as complex instruction set computer (CISC) processors (e.g., x86 processors) and/or a reduced instruction set computer (RISC) processors such as ARM processors, GPUs, DPUs, NPUs, TPUs, and/or the like, that may execute instructions stored in any type of memory and/or implement any type of execution environment such as a container, a virtual machine, an operating system such as Linux, an Extended Berkeley Packet Filter (eBPF) environment, and/or the like, or a combination thereof.

The memory 206 may be used, for example, by one or more of the compute resources 207 to store input data, output data (e.g., computation results), intermediate data, transitional data, and/or the like. As another example, in an embodiment in which the device 204 is implemented at least partially as a storage device, the memory 206 may be used as a cache for storage media in the device functionality circuit 209. The memory 206 may be implemented, for example, with volatile memory such as dynamic random access memory (DRAM), static random access memory (SRAM), and/or the like, as well as any other type of memory such as nonvolatile memory.

In some embodiments, the memory 215 and/or processor(s) 210 at the host 201 and/or the memory 206 and/or compute resources 207 at the device 204 may include software, instructions, programs, code, and/or the like, that may be performed, executed, and/or the like, using one or more compute resources (e.g., hardware (HW) resources). Examples may include software implemented in any language such as assembly language, C, C++, and/or the like, binary code, FPGA code, one or more operating systems, kernels, environments such as eBPF, file systems, databases, data structures, and/or the like. Software, instructions, programs, code, and/or the like, may be stored, for example, in a repository in memory 206 and/or 215 and/or compute resources 207 and/or processor(s) 210. Software, instructions, programs, code, and/or the like, may be downloaded, uploaded, sideloaded, pre-installed, built-in, and/or the like, to the memory 206 and/or 215 and/or compute resources 207 and/or processor(s) 215. In some embodiments, the host 201 and/or device 204 may receive one or more instructions, commands, and/or the like, to select, enable, activate, execute, and/or the like, software, instructions, programs, code, and/or the like. Examples of computational operations, functions, and/or the like, that may be implemented by the memory 206 and/or 215, compute resources 207 and/or processor(s) 215, software, instructions, programs, code, and/or the like, may include any type of algorithm, data movement, data management, data selection, filtering, encryption and/or decryption, compression and/or decompression, checksum calculation, hash value calculation, cyclic redundancy check (CRC), weight calculations, activation function calculations, training, inference, classification, regression, and/or the like, for artificial intelligence (A/I), machine learning (ML), neural networks, and/or the like.

A communication interface 202 at a host 201, a communication interface 205 at a device 204, and/or a communication connection 203 may implement, and/or be implemented with, one or more interconnects, one or more networks, a network of networks (e.g., the internet), and/or the like, or a combination thereof, using any type of interface, communication technique, and/or the like. For example, the communication connection 203, and/or one or more of the interfaces 202 and/or 205 may implement, and/or be implemented with, any type of wired and/or wireless communication medium, interface, network, interconnect, communication technique, and/or the like including Peripheral Component Interconnect Express (PCIe), Nonvolatile Memory Express (NVMe), NVMe over Fabric (NVMe-oF), Compute Express Link (CXL), and/or a coherent communication technique such as CXL.mem, CXL.cache, CXL.io and/or the like, Gen-Z, Open Coherent Accelerator Processor Interface (OpenCAPI), Cache Coherent Interconnect for Accelerators (CCIX), and/or the like, Advanced eXtensible Interface (AXI), Direct Memory Access (DMA), Remote DMA (RDMA), RDMA over Converged Ethernet (ROCE), Advanced Message Queuing Protocol (AMQP), Ethernet, Transmission Control Protocol/Internet Protocol (TCP/IP), FibreChannel, InfiniBand, Serial ATA (SATA), Small Computer Systems Interface (SCSI), Serial Attached SCSI (SAS), iWARP, any generation of wireless network including 2G, 3G, 4G, 5G, 6G, and/or the like, any generation of Wi-Fi, Bluetooth, near-field communication (NFC), and/or the like, or any combination thereof. In some embodiments, a communication connection 203 may include one or more switches, hubs, nodes, routers, and/or the like.

For purposes of illustration, some embodiments may be described in the context of a memory access technique that may implement CXL which may include CXL.mem, CXL.cache, CXL.io and/or the like. However, the principles disclosed herein may be interchangeable with any other memory access technique, including techniques that may use any cache coherent techniques, Gen-Z, OpenCAPI, CCIX, and/or the like.

A device 204 may be implemented in any physical form factor. Examples of form factors may include a 3.5 inch, 2.5 inch, 1.8 inch, and/or the like, storage device (e.g., storage drive) form factor, M.2 device form factor, Enterprise and Data Center Standard Form Factor (EDSFF) (which may include, for example, E1.S, E1.L, E3.S, E3.L, E3.S 2T, E3.L 2T, and/or the like), add-in card (AIC) (e.g., a PCIe card (e.g., PCIe expansion card) form factor including half-height (HH), half-length (HL), half-height, half-length (HHHL), and/or the like), Next-generation Small Form Factor (NGSFF), NF1 form factor, compact flash (CF) form factor, secure digital (SD) card form factor, Personal Computer Memory Card International Association (PCMCIA) device form factor, and/or the like, or a combination thereof. Any of the devices disclosed herein may be connected to a system using one or more connectors such as SATA connectors, SCSI connectors, SAS connectors, M.2 connectors, EDSFF connectors (e.g., 1C, 2C, 4C, 4C+, and/or the like), U.2 connectors (which may also be referred to as SSD form factor (SSF) SFF-8639 connectors), U.3 connectors, PCIe connectors (e.g., card edge connectors), and/or the like.

Any of the devices disclosed herein may be used in connection with one or more personal computers, smart phones, tablet computers, servers, server chassis, server racks, datarooms, datacenters, edge datacenters, mobile edge datacenters, and/or any combinations thereof.

In some embodiments, a device 204 may be implemented with any device that may include, or have access to, memory, storage media, and/or the like, to store data that may be processed by one or more compute resources 207. Examples may include memory expansion and/or buffer devices such as CXL type 2 and/or CXL type 3 devices, as well as CXL type 1 devices that may include memory, storage media, and/or the like.

Fig. 3 illustrates an embodiment of a communication scheme having two access modes that may be used for a cleaning scheme for a data structure in accordance with example embodiments of the disclosure. The scheme 330 illustrated in Fig. 3 may include one or more elements that may, in some aspects, be similar to, the embodiments illustrated in Fig. 1 or Fig. 2 in which similar elements may be indicated by reference numbers ending in, and/or containing, the same digits, letters, and/or the like.

The scheme 330 illustrated in Fig. 3 may include a host 301 and a device which, in this embodiment, may be implemented as a storage device 304.

The host 301 may include a communication interface 302 and one or more processors that may run an operating system 313, application 312, and/or the like, any of which may implement a data structure such as segments in a file system, a merge tree in a database, and/or the like, that may be updated by storing valid data to an unoccupied portion of memory and/or storage space in which the data structure may be stored. In such an embodiment, the host 301 may implement a cleaning scheme for the data structure such as any of the cleaning schemes disclosed herein.

The storage device 304 may include a communication interface 305, one or more compute resources 307, memory 306 (e.g., DRAM), a device functionality circuit which, in this embodiment, may be implemented at least partially with storage media 309, and/or a cache controller 314. In some embodiments, memory 306 may be addressable in relatively small units such as bytes, words, cache lines, flits, and/or the like, whereas storage media 309 may be addressable in relatively large units such as pages, blocks, sectors, and/or the like.

The storage device 304 may be configured to enable the host 301 to access the storage media 309 as storage using a first data transfer mechanism 331, or as memory using a second data transfer mechanism 332. In one example embodiment, the communication interface 305 may implement the first data transfer mechanism 331 using a storage technique that may use a communication technique such as NVMe running over a coherent interface such as CXL using an I/O technique that may implement, for example, CXL.io. Alternatively, or additionally, the communication interface 305 may implement the first data transfer mechanism 331 using a storage technique that may implement, for example, NVMe running over an interconnect interface such as PCIe. The first data transfer mechanism 331 may include one or more segments, portions, paths, and/or the like 331A, 331B, 331C, and/or 331D. The second data transfer mechanism 332 may include one or more segments, portions, paths, and/or the like 332A, 332B, 332C, and/or 332D.

The communication interface 305 may implement the second data transfer mechanism 332 using a memory access technique that may use CXL.mem and/or CXL.cache. The configuration illustrated in Fig. 3 may enable the operating system (e.g., Linux) 313 to access the storage media 309 as storage, for example, using a file system based access scheme that supports NVMe running over CXL.io. For example, a file system in the operating system 313 may access data in the storage media 309 using NVMe read and/or write commands that may read data from, and/or write data to, the storage media 309 in units of one or more pages.

The configuration illustrated in Fig. 3 may also enable the application 312 to access the storage media 309 as memory, for example, with memory load/store instructions using CXL.mem and/or CXL.cache. In some embodiments, the cache controller 314 may configure a portion of the memory media 306 as a cache for the storage media 309. For example, because memory load and/or store commands may access data in relatively small units such as bytes, words, cache lines, flits, and/or the like, and because storage read and/or write commands may access the storage media 309 in relatively larger units such as pages, blocks, sectors, and/or the like, the storage device 304 may service a memory load command for data (e.g., a byte, word, cache line, flit, and/or the like) in the storage media 309 by reading a page, block, sector, and/or the like, containing the requested data from the storage media 309 and storing the page, block, sector, and/or the like in a cache (e.g., in a portion of memory media 306). The storage device 304 may extract the requested data from the cache and return it to the host 301 using a memory access technique that may use CXL.mem and/or CXL.cache in response to the memory load command.

The embodiment illustrated in Fig. 3 may be used, for example, to implement a memory mapped storage scheme in accordance with example embodiments of the disclosure. Depending on the implementation details, such a scheme may improve performance (e.g., reduce latency) compared, for example, to a memory mapped file scheme or other data structure implemented by an operating system. For example, an operating system such as Linux may implement a memory mapped file scheme in which, for an application running at a host to read, as memory, data in a file stored in storage media at a storage device, the operating system may read, as storage, a sector from the storage media using a storage access technique that may use, for example, NVMe. The operating system may then store the sector in main memory (e.g., DRAM) from which the application may load the requested data.

However, in the multi-mode access scheme illustrated in Fig. 3, the operating system 313 may be configured to enable the application 312 to access, as memory, a file or other data structure stored in the storage media 309 relatively directly, for example, by bypassing one or more operations of the operating system 313 and using the second data transfer mechanism 332 (e.g., using CXL.mem and/or CXL.cache). For instance, in an example storage access operation, the application 312 may send a memory load command (e.g., using CXL which may bypass the operating system 313) to the storage device 304 to request a byte of data in the storage media 309. If the requested byte of data is stored in a cache (e.g., in a portion of memory media 306), the cache controller 314 may read the requested data from the cache and return the requested data in response to the memory load command. However, even if the requested data is not stored in a cache, and the cache controller 314 uses a storage read command to read a page containing the requested byte of data from the storage media 309 (which may then be stored in a cache from which the memory load command may be serviced), the memory load command may still bypass the operating system 313. Depending on the implementation details, this may reduce overhead, power consumption, latency, and/or the like, associated with an operating system transferring a sector to host memory. Using the second data transfer mechanism 332 (e.g., using a memory access technique that may use CXL.mem and/or CXL.cache) may also result in a faster data transfer compared, for example, to using a storage access technique that may use NVMe running over a PCIe or CXL.io transport scheme which, depending on the implementation details, may be relatively slow.

Additionally, or alternatively, the scheme 330 illustrated in Fig. 3 may include a data transfer mechanism 333 (e.g., using CXL.mem and/or CXL.cache) that may enable the operating system 313, a process, a service, a virtual machine (VM), a VM manager, and/or the like, running at the host 301 to access memory media 306 and/or storage media 309 as memory (e.g., using memory media 306 as cache for the storage media 309). The data transfer mechanism 333 may include one or more segments, portions, paths, and/or the like 333A, 333B, 333C, and/or 333D.

In some embodiments, a memory access technique used by any of the data transfer mechanisms 331, 332, and/or 333 may enable data to be transferred from the storage device 304 to a processor at the host 301 (e.g., to a processor cache) in a relatively direct manner, e.g., without being stored in a host memory at the host 301.

Although the multi-mode access scheme illustrated in Fig. 3 may be described in the context of a storage device 304, a similar multi-mode access scheme in accordance with example embodiments of the disclosure may also be implemented with a computational device implemented, for example, as a NIC, an accelerator, and/or any other type of computational device.

Moreover, the multi-mode access scheme illustrated in Fig. 3 may be described in a context in which storage media 309 may be accessed using a first data transfer mechanism 331 which may be implemented with a storage technique (e.g., using NVMe) over an interconnect interface such as PCIe and/or over a coherent interface (e.g., CXL) implementing an I/O technique (e.g., using CXL.io). In other embodiments, however, other resources such as device memory 306 and/or any other device functionality that may be implemented with a device functionality circuit 309 (e.g., a NIC, an accelerator, one or more compute resources 307, and/or the like) may be accessed using a first data transfer mechanism 331 and/or a second data transfer mechanism 332 as described above. For example, in some embodiments, either or both of the first data transfer mechanism 331 and/or second data transfer mechanism 332 may be used to allocate memory 306, configure one or more compute resources 307, transfer one or more commands (e.g., to load input data to memory 306, execute a computational operation using one or more compute resources 307, and/or transfer one or more results to a host 301), and/or the like.

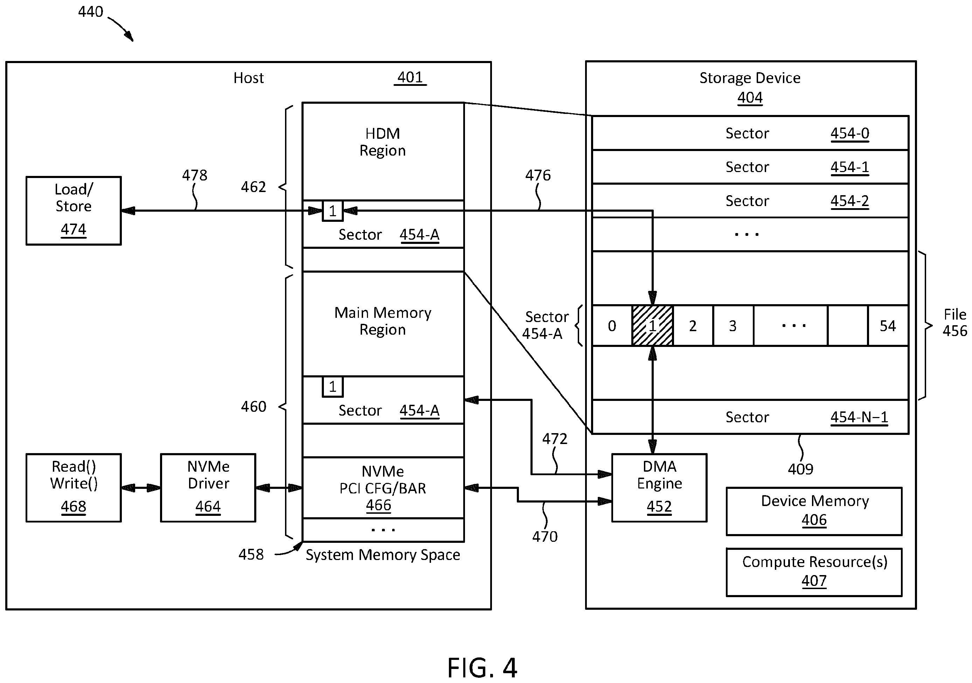

Fig. 4 illustrates some example implementation details for embodiment of a communication scheme having two access modes that may be used for a cleaning scheme for a data structure in accordance with example embodiments of the disclosure. The scheme 440 illustrated in Fig. 4 may include a device implemented as a storage device 404 having one or more compute resources 407, a DMA engine 452 and/or a device functionality circuit implemented with storage media 409. For purposes of illustration, the storage media 409 illustrated in Fig. 4 may be accessed in units of sectors. However, other embodiments may access storage media 409 in units of pages, blocks, and/or the like. In some embodiments, the scheme 440 may also include a device memory 406 (e.g., DRAM) that may be used as a buffer, cache, and/or the like for one or more (e.g., any) accesses of the storage media 409, for example, during a cleaning operation.

Data may be stored in the storage media 409 as sectors 454-0, 454-1, ..., 454-N-1 (which may be referred to collectively and/or individually as 454). A sector may include, for example, 512 bytes numbered 0 through 511. A memory mapped file or other data structure 456 may be stored in one or more sectors 454 including sector 454-A which may include data of interest stored in byte 1.

A host 401 may include a system memory space 458 having a main memory region 462 that may be implemented, for example, with dual inline memory modules (DIMMS) on a circuit board (e.g., a host motherboard). Some or all of the storage media 409 may be mapped as host managed device memory (HDM) 462 to a region of the system memory space 458. Some or all of the storage media 409 may be mapped as HDM using a memory access technique that may be implemented, for example, using a coherent interface such as CXL implementing a memory access technique that may use CXL.mem and/or CXL.cache. The host 401 (or an application, process, service, VM, VM manager, and/or the like, running on the host) may access data in the memory mapped file or other data structure 456 as storage using a first access mode (which may also be referred to as a method) or as memory using a second access mode.

The first mode may be implemented by an operating system running on the host 401. The operating system may implement the first mode with a storage access technique that may use NVMe (e.g., using an NVMe driver 464 at the host 401). The NVMe techniques may be implemented with an underlying transport scheme based, for example, PCIe and/or CXL.io which may use a PCIe physical layer. The NVMe driver 464 may use a portion 466 of system memory 458 for PCIe configuration (PCI CFG), base address registers (BAR), and/or the like.

An application (or other user) may access data in the file or other data structure 456 in units of sectors (or blocks, pages, and/or the like) using one or more storage read/write instructions 468. For example, to read the data stored in byte 1 in sector 454-A of file or other data structure 456, an application (or other user) may issue, to the NVMe driver 464, a storage read command 468 for the sector 454-A that includes byte 1. The NVMe driver 464 may initiate a DMA transfer by the DMA engine 452 as shown by arrow 470. The DMA engine 452 may transfer the sector 454-A to the main memory region 460 of system memory 458 as shown by arrow 472. The application may access byte 1 by reading it from the main memory region 460.

The second mode may be implemented with coherent interface techniques that may map the storage media 409 as host managed device memory 462 to a region of the system memory space 458. Thus, the sector 454-A including byte 1 may be mapped to the HDM region 462. A coherent interface technique may be implemented, for example, using memory access techniques such as CXL.mem and/or CXL.cache.

An application (or other user) may also access data in the file or other data structure 456 in units of bytes (or words, cache lines, flits, and/or the like) using one or more memory load/store instructions 474. For example, to read the data stored in byte 1 of the file or other data structure 456, an application (or other user) may issue a memory load command 474. The data stored in byte 1 may be transferred to the application using, for example, CXL.mem and/or CXL.cache as shown by arrows 476 and 478. In some embodiments, data transferred using CXL.mem may be transferred using a cache which may be implemented, for example, using the device memory 406.

Depending on the implementation details, accessing the data stored in byte 1 of the file or other data structure 456 using the second mode (e.g., using CXL) may reduce latency (especially, in some embodiments, when accessing data in relatively small units), increase bandwidth, reduce power consumption, and/or the like, for any number of the following reasons. In an interface scheme such as CXL, a sector may be mapped, rather than copied to system memory, thereby reducing data transfers. In a coherent interface scheme, data may be byte addressable, thereby reducing the amount of data transferred to access the data of interest in byte 1 as compared to copying an entire sector to system memory. A coherent interface scheme may provide a processor, application or other user may more direct access to data, e.g., by bypassing some or all of an operating system, a host memory, and/or the like.

For example, in some embodiments, an interface scheme such as CXL may use a memory access technique that may enable data to be loaded (e.g., directly) from a storage device 404 to a processor (e.g., a processor cache) while bypassing a host memory at the host 401.

In some embodiments, data accessed in a sector 454 using memory load/store instructions 474 may be accessed using a cache that may be implemented with memory media that may be located, for example, in the storage device 404, system memory space 458, and/or the like. Such a cache configuration may be used, for example, because the sectors 454 or other storage media in a computational storage device may be accessible (e.g., only accessible) in units of sectors, blocks, pages, and/or the like, whereas a memory load/store command 474 may access data in units of bytes, words, cache lines, and/or the like.

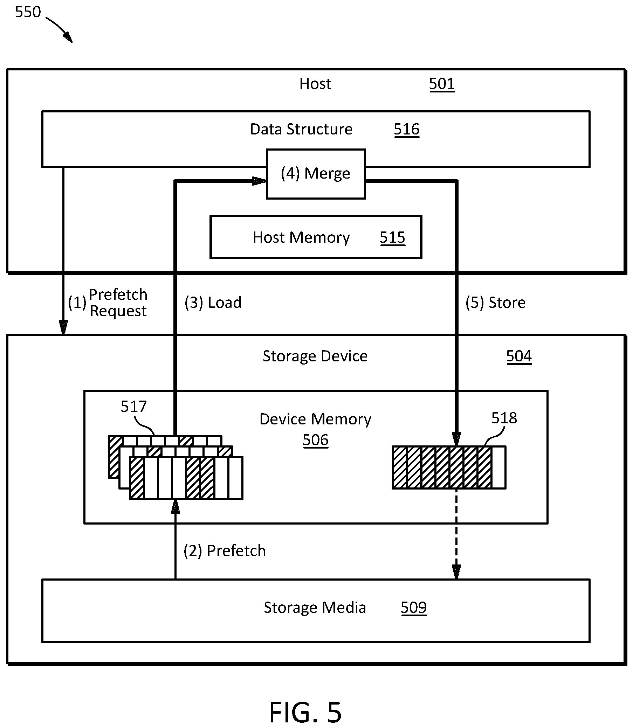

Fig. 5 illustrates an embodiment of a cleaning scheme for a data structure using a memory access technique in accordance with example embodiments of the disclosure. The scheme 550 illustrated in Fig. 5 may be implemented, for example, using any of the systems described herein including those illustrated in Fig. 1, Fig. 2, and/or Fig. 3 in which similar elements may be indicated by reference numbers ending in, and/or containing, the same digits, letters, and/or the like.

The scheme 550 illustrated in Fig. 5 may include one or more hosts 501 (which may be referred to collectively and/or individually as the host 501) and one or more storage devices 504 (which may be referred to collectively and/or individually as the storage device 504) that may communicate using one or more techniques including a memory access technique that may implement, for example, CXL.mem. The host 501 may implement a data structure 516, for example, within a file system, a database, and/or the like, that may be updated by storing valid data to an unoccupied portion of memory and/or storage space in which the data structure 516 may be stored.

The host 501 may implement a cleaning operation as illustrated in Fig. 5 to reduce invalid data in the data structure 516 by merging valid data from one or more portions of the data structure 516 into a more compact form. A portion of the data structure 516 may be implemented, and/or referred to, as a block, segment, page, node, branch, leaf, and/or the like, or one or more portions thereof, any or all of which may be referred to as a block for convenience.

The storage device 504 may include device memory 506. In some embodiments, the storage device 504 may allocate a portion of device memory 506 as a cache for a memory access technique.

In some embodiments, a cache may reduce the latency of some access operations, for example, by storing a copy of frequently and/or recently accessed data in cache (e.g., memory) media that may have a relatively low access latency compared to another (e.g., storage) media. For example, a storage device may receive a request to access data that is present in a device cache (which may be referred to as a cache hit) and process the request by reading or writing the requested data from or to the device cache which may have a relatively low access latency. The storage device may receive a request to access data that is not present in the device cache (which may be referred to as a cache miss) and process the request by reading or writing data from or to the storage media which may have a relatively high access latency.

Referring to Fig. 5, the cleaning operation may include a prefetch request (1), a prefetch operation (2), a load operation (3), a merge operation (4), and/or a store operation (5).

A prefetch request (1) may be sent from the host 501 to the storage device 504 to cause the storage device 504 to perform a prefetch operation (2) in which the storage device 504 may load one or more blocks 517 of old data (which may be referred to as old blocks) from storage media 509 to device memory 506 (e.g., to a portion of device memory 506 allocated as a cache for a memory access technique). The one or more blocks 517 of old data may include cold data (e.g., data that may be accessed relatively infrequently and/or may not have been accessed recently) that may have been written back to storage media 509. Additionally, or alternatively, one or more blocks 517 of old data may include hot data (e.g., that may have already been present in the device memory 506).

At a load operation (3), the storage device 504 may send one or more of the blocks 517 of old data to the host 501 using a memory access technique that may implement, for example, CXL.mem. In some embodiments, the memory access technique may send one or more of the blocks 517 of old data to a processor cache for a processor at the host 501 thereby bypassing, at least partially, a host memory 515.

A merge operation (4) may combine one or more portions of valid data (indicated with diagonal shading) in one or more blocks 517 of old data into one or more blocks 518 of old data (which may also be referred to as new blocks, merged blocks, or result blocks) in which valid data may be indicated by diagonal shading, and/or invalid data may be indicated without shading. Additionally, or alternatively, additional valid data for the data structure 516 (e.g., new data) may be included (e.g., along with old data) in the one or more new blocks 518. In some situations, the amount of space (e.g., the number of new blocks 518) into which the portions of valid data may be combined may be smaller than the amount of space occupied by the old blocks 517.

At a store operation (5), valid data in one or more new blocks 518 resulting from a merge operation may be sent from the host 501 to the storage device 504 (e.g., to device memory 506 or a cache implemented therein), for example, using a memory access technique that may implement, for example, CXL.mem. For example, host 501 may use a memory access technique to write valid data to specific locations in new blocks 518 that may reside in device memory 506. In some embodiments, the memory access technique may send valid data in one or more of the new blocks 518 from a processor cache for a processor at the host 501 to the storage device 504 thereby bypassing, at least partially, a host memory 515. In some embodiments, one or more (e.g., all) new blocks 518 may be written to storage media 509, for example, using a write back operation as illustrated by the dashed arrow. In some embodiments, one or more (e.g., all) old blocks 517 may be deleted (e.g., trimmed) from device memory 506 and/or storage media 509. One or more old blocks 517 may be deleted, for example, after one or more new blocks 518 are written to storage media 509 so the valid data may be recovered in the event of a power failure before a write back operation is completed.

Depending on the implementation details, the use of a memory access technique to access a storage device may reduce memory usage (e.g., at the host memory 515), IO operations, power consumption, and/or the like. Moreover, reducing usage of host memory 515 may reduce latency for accessing one or more portions of the data structure 516, for example, by preventing hot data in the host memory from being evicted by old (possibly cold) data for a cleaning operation. Additionally, or alternatively, the use of a memory access technique to transfer data (e.g., directly) from the storage device 504 to a processor at the host 501 may reduce memory bus traffic for the host memory 515.

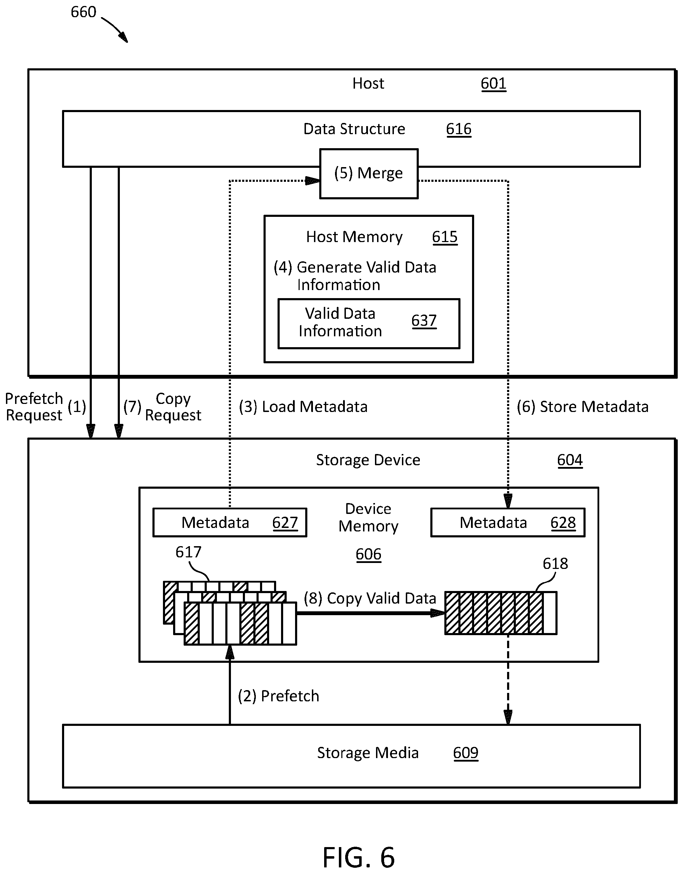

Fig. 6 illustrates an embodiment of a cleaning scheme for a data structure using a copy operation to perform a portion of a cleaning operation at a storage device in accordance with example embodiments of the disclosure. The scheme 660 illustrated in Fig. 6 may be implemented, for example, using any of the systems described herein including those illustrated in Fig. 1, Fig. 2, and/or Fig. 3 in which similar elements may be indicated by reference numbers ending in, and/or containing, the same digits, letters, and/or the like.

The cleaning scheme 660 illustrated in Fig. 6 may include one or more hosts 601 (which may be referred to collectively and/or individually as the host 601) and one or more storage devices 604 (which may be referred to collectively and/or individually as the storage device 604) that may communicate using one or more communication techniques. For purposes of illustration, the cleaning scheme 660 may be described as using a memory access technique that may implement, for example, CXL.mem, but the cleaning scheme 660 may be implemented with any suitable technique(s), not necessarily a memory access technique.

The host 601 may implement a data structure 616 such as segments within a file system, a merger tree within a database, and/or the like, that may be updated by storing valid data to an unoccupied portion of memory and/or storage space in which the data structure 616 may be stored.

The host 601 may implement a cleaning operation as illustrated in Fig. 6 to reduce invalid data in the data structure 616 by merging valid data from one or more portions of the data structure 616 into a more compact form. A portion of the data structure 616 may be implemented, and/or referred to, as a block, segment, page, node, branch, leaf, and/or the like, or one or more portions thereof, any or all of which may be referred to as a block for convenience.

The storage device 604 may include device memory 606. In some embodiments, the storage device 604 may allocate a portion of device memory 606 as a cache for accessing storage media 609. For purposes of illustration, the cache may be described as a cache for a memory access technique that may implement, for example, CXL.mem, but the cleaning scheme 660 may be implemented with any suitable technique(s), not necessarily a memory access technique.

Referring to Fig. 6, the cleaning operation may include a prefetch request (1), a prefetch operation (2), a metadata load operation (3), a generate valid data information operation (4), a metadata merge operation (5), a metadata store operation (6), a copy request (7), and/or a copy operation (8).

A prefetch request (1) may be sent from the host 601 to the storage device 604 to cause the storage device 604 to perform a prefetch operation (2) in which the storage device 604 may load one or more old blocks 617 from storage media 609 to device memory 606 (e.g., to a portion of device memory 606 allocated as a cache to access the storage media 609). The one or more old blocks 617 may include cold data that may have been written back to storage media 609. Additionally, or alternatively, one or more old blocks 617 may include hot data (e.g., data that may have already been present in the device memory 606).

At a load metadata operation (3), the storage device 604 may send first metadata 627 for one or more of the old blocks 617 to the host 601 (e.g., to a processor cache at host 601). Examples of first metadata 627 may include information stored in old blocks 617, such as source addresses and/or size for data entries, a total number of entries, and/or timestamps indicating data creation time. This metadata may be used, for example to determine valid and invalid data by comparing data creation times. The first metadata 627 may be sent using a memory access technique and/or any other technique.

At a generate valid data information operation (4), host 601 may generate valid data information 637 indicating a location, amount, and/or the like, of valid data in one or more old blocks 617 that may be merged during copy operation (8). In some embodiments, valid data information 637 may be implemented as a copy list and may include one or more source locations (e.g., source addresses), destination locations (e.g., destination addresses), data sizes, and/or the like.

A metadata merge operation (5) may process the first metadata 627 to determine whether and/or how valid data within the one or more old blocks 617 may be combined to generate one or more new blocks 618 of data (e.g., valid data mixed with invalid data) that, depending on the implementation details, may use less memory and/or storage space than the one or more old blocks 617. The merge operation (5) may generate second metadata 628 that may include one or more destination addresses (e.g., of new blocks 618), data size (e.g., number of blocks, block size, and/or location and/or amount of valid data within one or more blocks), and/or the like.

At a store operation (6), the data structure 616 may send second metadata 628 resulting from a metadata merge operation to the storage device 604 (e.g., to a portion of device memory 606 allocated as a cache to access the storage media 609). The second metadata 628 may be sent using a memory access technique that may implement, for example, CXL.mem and/or any other technique.

A copy request (7), which may be sent form host 610 to storage device 604, may include some or all of the valid data information 637, for example, in the form of a copy list including one or more source addresses, destination addresses, data sizes, and/or the like.

At a copy operation (8), which may be initiated by copy request (7), the storage device 604 may copy, based on at least some of the second metadata 628, valid data from one or more old blocks 617 to one or more new blocks 618 that, depending on the implementation details, may use less memory and/or storage space than the one or more old blocks 617. In some embodiments, one or more (e.g., all) new blocks 618 may be written to storage media 609, for example, using a write back operation. In some embodiments, one or more (e.g., all) old blocks 617 may be deleted (e.g., trimmed) from device memory 606 and/or storage media 609. One or more old blocks 617 may be deleted, for example, after one or more new blocks 618 are written to storage media 609 so the valid data may be recovered in the event of a power failure before a write back operation is completed.

Depending on the implementation details, the use of a copy operation within a storage device 604 may reduce IO traffic (e.g., between a storage device 604 and a host 601), reduce power consumption, reduce host processor usage, reduce host memory usage, reduce latency for accessing one or more portions of the data structure 616, for example, by preventing hot data in the host memory 615 from being evicted by old (possibly cold) data for a cleaning operation. Additionally, or alternatively, the use of a copy operation within a storage device 604 may reduce memory bus traffic for the host memory 615.

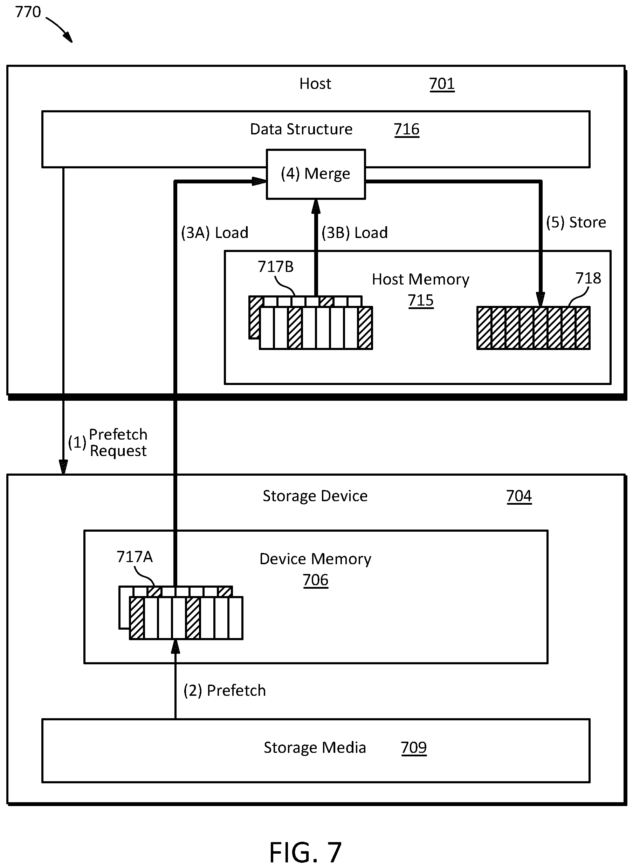

Fig. 7 illustrates an embodiment of a cleaning scheme for a data structure that may perform a merge operation based on a status of a portion of the data structure stored in a memory in accordance with example embodiments of the disclosure. The scheme 770 illustrated in Fig. 7 may be implemented, for example, using any of the systems described herein including those illustrated in Fig. 1, Fig. 2, and/or Fig. 3 in which similar elements may be indicated by reference numbers ending in, and/or containing, the same digits, letters, and/or the like.

The cleaning scheme 770 illustrated in Fig. 7 may include one or more hosts 701 (which may be referred to collectively and/or individually as the host 701) and one or more storage devices 704 (which may be referred to collectively and/or individually as the storage device 704) that may communicate using one or more communication techniques. For purposes of illustration, the cleaning scheme 770 may be described as using a memory access technique that may implement, for example, CXL.mem, but the cleaning scheme 770 may be implemented with any suitable communication techniques(s), not necessarily a memory access technique.

The host 701 may implement a data structure 716 such as segments in a file system, a merge tree in a database, and/or the like, that may be updated by storing valid data to an unoccupied portion of memory and/or storage space in which the data structure 716 may be stored.

The host 701 may implement a cleaning operation as illustrated in Fig. 7 to reduce invalid data in the data structure 716 by merging valid data from one or more portions of the data structure 716 into a more compact form. A portion of the data structure 716 may be implemented, and/or referred to, as a block, segment, page, node, branch, leaf, and/or the like, or one or more portions thereof, any or all of which may be referred to as a block for convenience.

The storage device 704 may include device memory 706. In some embodiments, the storage device 704 may allocate a portion of device memory 706 as a cache for accessing storage media 709. For purposes of illustration, the cache may be described as a cache for a memory access technique, but the cleaning scheme 770 may be implemented with any suitable technique(s), not necessarily a memory access technique.

Referring to Fig. 7, the cleaning operation may include a prefetch request (1), a prefetch operation (2), a load operation (3) (which may include load operations (3A) and/or (3B)), a merge operation (4), and/or a store operation (5).

A prefetch request (1) may be sent from the host 701 to the storage device 704 to cause the storage device 704 to perform a prefetch operation (2) in which the storage device 704 may load one or more old blocks 717 from storage media 709 to device memory 706 (e.g., to a portion of device memory 706 allocated as a cache to access the storage media 709). The one or more old blocks 717 may include cold data that may have been written back to storage media 709. Additionally, or alternatively, one or more old blocks 717 may include hot data (e.g., that may have already been present in the device memory 706).

At a load operation (3A), the storage device 704 may send one or more old blocks 717A to the host 701 using a memory access technique that may implement CXL.mem and/or any other communication technique. In some embodiments, the memory access technique may send one or more of the old blocks 717 to a processor cache for a processor at the host 701 thereby bypassing, at least partially, a host memory 715. Additionally, or alternatively, at load operation (3B) host 701 may load one or more old blocks 717B from host memory 715 to a processor cache for a processor at the host 701. One or more old blocks 717B may be located in host memory 715, for example, because it may include hot data.

A merge operation (4) may combine one or more portions of valid data (indicated with diagonal shading) in one or more old blocks 717A and/or 717B into one or more resulting new blocks 718 in which valid data may be indicated by diagonal shading, and/or invalid data may be indicated without shading. Additionally, or alternatively, additional valid data for the data structure 716 (e.g., new data) may be included (e.g., along with old data) in the one or more new blocks 718. In some situations, the amount of space (e.g., the number of new blocks 718) into which the portions of valid data may be combined may be smaller than the amount of space occupied by the old blocks 717.

At a store operation (5), one or more new blocks 718 generated by a merge operation (4) may be stored at least partially in host memory 715. Storing one or more new blocks 718 in host memory 715 may be beneficial, for example, because it may contain hot data that may be likely to be accessed soon and therefore may reduce latency caused by loading the hot data from a storage device 704.

Some or all of new blocks 718 may be copied or moved from host memory 715 to storage media 709, for example, as part of a write back operation, cache replacement policy, and/or the like. However, some or all of new blocks 718, especially new blocks 718 containing hot data, may be kept in host memory 715, for example, until evicted based on a cache replacement policy. One or more new blocks 718 may be sent from host 701 to storage device 704, for example, using a memory access technique that may implement CXL.mem and/or any other communication technique. In some embodiments, one or more (e.g., all) old blocks 717 may be deleted (e.g., trimmed) from host memory 715, device memory 706, and/or storage media 709.

Depending on the implementation details, performing a cleaning operation at least partially using old data stored in a host memory based on a status of the old data (e.g., status as hot data), may reduce IO traffic (e.g., between a storage device 704 and a host 701), reduce power consumption, reduce latency for accessing one or more portions of the data structure 716, for example, by preventing hot data in the host memory 715 from being evicted by old (possibly cold) data for a cleaning operation.

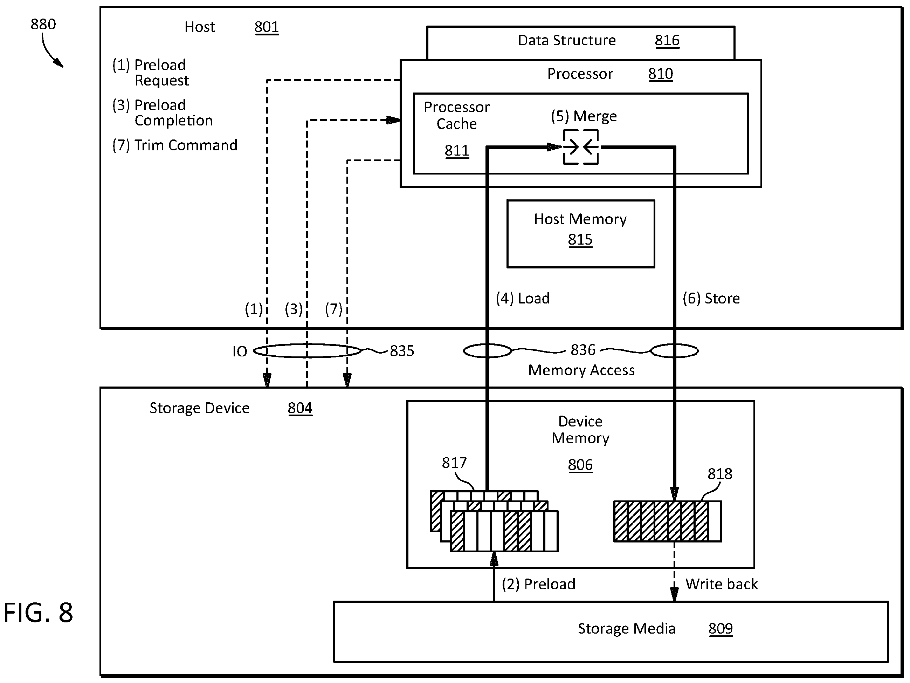

Fig. 8 illustrates some example implementation details for a second embodiment of a cleaning scheme using a memory access technique in accordance with example embodiments of the disclosure. The scheme 880 illustrated in Fig. 8 may be implemented, for example, using any of the systems described herein including those illustrated in Fig. 1, Fig. 2, Fig. 3, and/or Fig. 5 in which similar elements may be indicated by reference numbers ending in, and/or containing, the same digits, letters, and/or the like. The scheme 880 illustrates some possible implementation details that may be used in addition to, or as an alternative to, those used with the scheme 550 illustrated in Fig. 5.

Referring to Fig. 8, one or more hosts 801 and one or more storage devices 804 may communicate using one or more communication interfaces, techniques, protocols, and/or the like. For purposes of illustration, the scheme 880 may be illustrated using a coherent interface such as CXL, a memory access technique that may implement, for example, CXL.mem 836, and/or an IO technique 835 that may implement, for example, CXL.io, but other interfaces, techniques, protocols, and/or the like, may be used. The host 801 may include one or more processors 810 having one or more processor caches 811, and a host memory 815. The storage device 804 may include storage media 809 and/or device memory 806. In some embodiments, a portion of device memory 806 may be configured as a cache for memory access technique 836. The host 801 may be configured, for example, to implement a data structure 816 such as segments in a file system, a merge tree in a database, and/or the like, which may be updated by storing valid (e.g., new) data to an unoccupied portion of memory and/or storage space in which the data structure may be stored.

A cleaning operation may include one or more of a preload request (1), a preload operation (2), a preload completion (3), a load operation (4), a merge operation (5), a store operation (6), a trim command (7), and/or other operations.

A preload request (1), which may also be referred to as a prefetch request, may be sent by the processor 810 to the storage device 804 using, for example, an IO technique 835. In this and other embodiments, a preload request (1) may include information such as one or more source addresses for old blocks 817 that may include invalid data and/or valid data (which may include hot data and/or cold data), data size (e.g., number of blocks, block size, and/or the like), and/or other information to enable the storage device 804 to preload data. Metadata may be used to compare timestamps of data entries (e.g., data entries with the same key). Among entries with matching keys, the most recent entry may be considered valid, and the others may be treated as invalid. In some embodiments, some or all of the information included with a preload request (1) may be referred to and/or characterized as metadata (e.g., information about the one or more blocks 817).

At preload operation (2), the storage device 804 may load one or more old blocks 817, and/or metadata for one or more old blocks 817, from storage media 809 to device memory 806 (e.g., to a portion of device memory 806 configured as a cache for a memory access technique that may implement, for example, CXL.mem). In some embodiments, the storage device 804 may use metadata that indicates which if any old blocks 817 or portions thereof contain valid data to reduce the amount of preloading performed. For example, if metadata indicates that one or more old blocks 817 include only invalid data, the storage device 804 may not transfer at least some of the one or more old blocks 817 including only invalid data to the device memory 806. Depending on the implementation details, avoiding the transfer of invalid data may reduce latency, power consumption, memory usage, memory bus usage, and/or the like.

Based on completion of some or all of preloading operation (2), the storage device 804 may send a preload completion (3) to the processor 810 using, for example, an IO technique that may implement, for example, CXL.io.

At a load operation (4), storage device 804 may transfer one or more old blocks 817, and/or metadata for one or more old blocks 817, from device memory 806 to processor 810 (e.g., to a processor cache 811) at host 801 using, for example, a memory access technique that may implement, for example, CXL.mem. In some embodiments, storage device 804 and/or processor 810 may use metadata for one or more old blocks 817 and/or portions thereof to reduce an amount of data transferred between storage device 804 and processor 810, for example, by avoiding the transfer of invalid data.

At merge operation (5), processor 810 may merge one or more old blocks 817 (in which valid data may be indicated by diagonal shading and/or invalid data may be indicated without shading) and/or metadata for one or more old blocks 817 to generate a result in the form of one or more new blocks 818 and/or metadata for one or more new blocks 818. Additionally, or alternatively, additional valid data for the data structure 816 (e.g., new data) may be included (e.g., along with old data) in the one or more new blocks 818. In some situations, the amount of space (e.g., the number and/or size of new blocks 818) into which the portions of valid data may be combined may be smaller than the amount of space occupied by one or more old blocks 817.

At store operation (6), one or more new blocks 818, and/or metadata for one or more new blocks 818, may be transferred from host 810 (e.g., from a processor cache 811 at processor 810) to storage device 804 using, for example, a memory access technique that may implement, for example, CXL.mem (e.g., to a portion of device memory 806 configured as a cache for a memory access technique).

In some embodiments, one or more (e.g., all) new blocks 818 may be written to storage media 809, for example, as part of a write back operation, cache replacement policy, and/or the like, as illustrated by the dashed arrow. Some or all of new blocks 818, especially new blocks 818 containing hot data, may be kept in device memory 806 (e.g., a portion of device memory 806 configured as a cache for a memory access technique), for example, until evicted based on a cache replacement policy.

Based on completion of some or all of the cleaning operation illustrated in Fig. 8, processor 810 may send a trim command (7) to storage device 804 to cause the storage device 804 to delete (e.g., trim) one or more (e.g., all) old blocks 817 and/or metadata for one or more old blocks 817 from device memory 806 and/or storage media 809. One or more old blocks 817 and/or metadata therefore, may be deleted, for example, after one or more new blocks 818 are written to storage media 809 so the valid data may be recovered in the event of a power failure before a write back operation is completed.

In some embodiments, and depending on the implementation details, a clean operation as illustrated in Fig. 8 may reduce memory usage (e.g., at the host memory 815), IO operations, power consumption, and/or the like. Moreover, reducing usage of host memory 815 may reduce latency for accessing one or more portions of data structure 816, for example, by preventing hot data in the host memory from being evicted by old (possibly cold) data for a cleaning operation. Additionally, or alternatively, the use of a memory access technique to transfer data (e.g., directly) from the storage device 804 to a processor at the host 801 may reduce memory bus traffic for host memory 815.

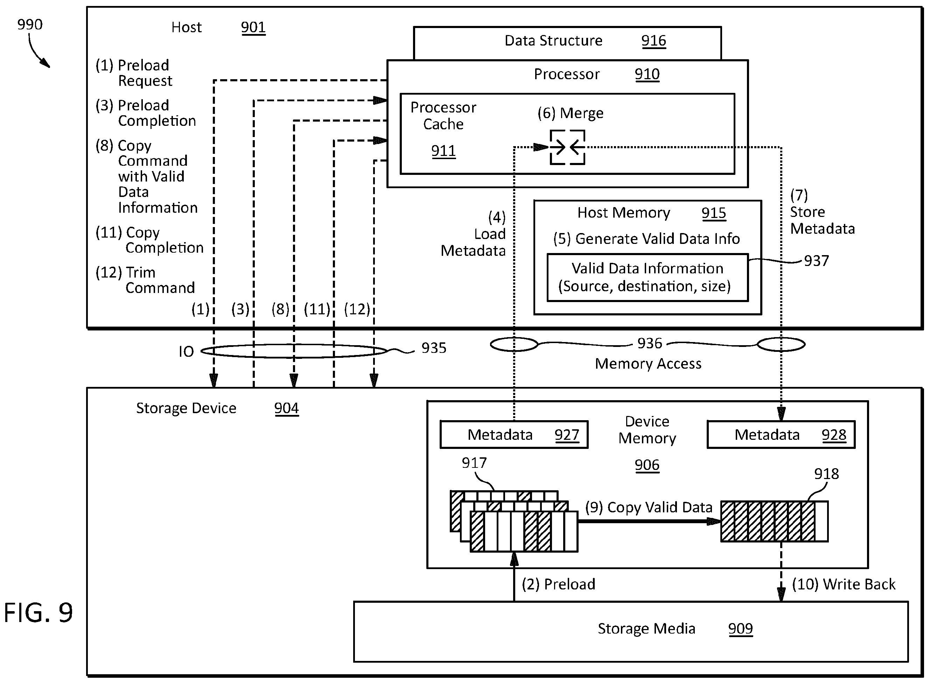

Fig. 9 illustrates some example implementation details for a second embodiment of a cleaning scheme for a data structure using a copy operation to perform a portion of a cleaning operation at a storage device in accordance with example embodiments of the disclosure. The scheme 990 illustrated in Fig. 9 may be implemented, for example, using any of the systems described herein including those illustrated in Fig. 1, Fig. 2, Fig. 3, and/or Fig. 6 in which similar elements may be indicated by reference numbers ending in, and/or containing, the same digits, letters, and/or the like. The scheme 990 illustrates some possible implementation details that may be used in addition to, or as an alternative to, those used with the scheme 660 illustrated in Fig. 6.

Referring to Fig. 9, one or more hosts 901 and one or more storage devices 904 may communicate using one or more communication interfaces, techniques, protocols, and/or the like. For purposes of illustration, the scheme 990 may be illustrated using a coherent interface such as CXL, a memory access technique that may implement, for example, CXL.mem 936, and/or an IO technique that may implement, for example, CXL.io 935, but other interfaces, techniques, protocols, and/or the like, may be used. Host 901 may include one or more processors 910 having one or more processor caches 911, and a host memory 915. Storage device 904 may include storage media 909 and/or device memory 906. In some embodiments, a portion of device memory 906 may be configured as a cache for memory access technique 936. Host 901 may be configured, for example, to implement a data structure 916 such as segments in a file system, a merge tree in a database, and/or the like, which may be updated by storing valid (e.g., new) data to an unoccupied portion of memory and/or storage space in which the data structure may be stored.

A cleaning operation may include one or more of a preload request (1), a preload operation (2), a preload completion (3), a load metadata operation (4), a generate valid data information operation (5), a merge metadata operation (6), a store metadata operation (7), a copy command (8), a copy operation (9), a write back operation (10), a copy completion (11), a trim command (12), and/or other operations.

A preload request (1) may be sent from host 901 to storage device 904 to cause the storage device 904 to perform a preload operation (2) in which one or more old blocks 917 may be loaded from storage media 909 to device memory 906 (e.g., to a portion of device memory 906 allocated as a cache to access the storage media 909). One or more old blocks 917 may include cold data that may have been written back to storage media 909. Additionally, or alternatively, one or more old blocks 917 may include hot data (e.g., that may have already been present in the device memory 906). Storage device 904 may send a preload completion to host 901 based on completing at least a portion of a preload operation of one or more old blocks 917.

At a load metadata operation (4), storage device 904 may send first metadata 927 for one or more of the old blocks 917 to host 901 (e.g., to processor cache 911 at host 901). Examples of first metadata 927 may include information stored in old blocks 917, such as source addresses and/or size for data entries, a total number of entries, and/or timestamps indicating data creation time. This metadata may be used, for example to determine valid and/or invalid data by comparing data creation times. The first metadata 927 may be sent using a memory access technique that may implement CXL.mem and/or any other communication technique.

At a generate valid data information operation (5), host 901 may generate valid data information 937 indicating a location, amount, and/or the like, of valid data in one or more old blocks 917 that may be merged during copy operation (9). In some embodiments, valid data information 937 may be implemented as a copy list and may include one or more source locations (e.g., source addresses), destination locations (e.g., destination addresses), data sizes, and/or the like.

A metadata merge operation (6) may process the first metadata 927 to determine whether and/or how valid data within the one or more old blocks 917 (e.g., valid data mixed with invalid data) may be combined to generate one or more resulting new blocks 918 of data (e.g., mostly or only valid data) that, depending on the implementation details, may use less memory and/or storage space than one or more old blocks 917. Metadata merge operation (6) may generate second metadata 928 that may include one or more destination addresses (e.g., of new blocks 918), data size (e.g., number of blocks, block size, and/or location and/or amount of valid data within one or more blocks), and/or the like.

At a metadata store operation (7), processor 910 may send second metadata 928 resulting from metadata merge operation (5) to storage device 904 (e.g., to a portion of device memory 906 allocated as a cache to access the storage media 909). Second metadata 928 may be sent, for example, using a memory access technique 936 that may implement, for example, CXL.mem and/or any other technique.

Processor 910 may send a copy command (7) (e.g., an internal copy command) to storage device 904 to begin copy operation (8). Copy command (7) may include valid data information 937 indicating a location, amount, and/or the like, of valid data in one or more old blocks 917 that may be merged during copy operation (8). In some embodiments, valid data information 937 may be implemented as a copy list and may include one or more source locations (e.g., source addresses), destination locations (e.g., destination addresses), data sizes, and/or the like.

At copy operation (8), based on at least some of the second metadata 918 and/or valid data information 937, storage device 904 may merge valid data from one or more old blocks 917 into one or more new blocks 918 that, depending on the implementation details, may use less memory and/or storage space than the one or more old blocks 917. In some embodiments, processor 910 may store new metadata in one or more new blocks 918. Copy operation (8) may be implemented, for example, using an internal copy module, one or more compute resources, a device controller, a media translation layer (e.g., an FTL), and/or the like.

At write back operation (9), one or more (e.g., all) new blocks 918 may be written to storage media 909. Storage device 904 may send a copy completion (10) to host 901 based on completing at least a portion of copy operation (8) (e.g., an internal copy operation) and/or at least a portion of write back operation (9).

In some embodiments, storage device 904 may delete (e.g., trim) one or more (e.g., all) old blocks 917 from device memory 906 and/or storage media 909, for example, based on receiving a trim command (11) from processor 910. One or more old blocks 917 may be deleted, for example, after one or more new blocks 918 are written to storage media 909 (e.g., at write back operation (9)) so the valid data may be recovered in the event of a power failure before a write back operation is completed.

Depending on the implementation details, the use of a copy operation (8) within storage device 904 may reduce IO traffic (e.g., between storage device 904 and host 901), reduce power consumption, reduce host processor usage, reduce host memory usage, reduce latency for accessing one or more portions of the data structure 916, for example, by preventing hot data in host memory 915 from being evicted by old (possibly cold) data for a cleaning operation. Additionally, or alternatively, the use of a copy operation within storage device 904 may reduce memory bus traffic for host memory 915.

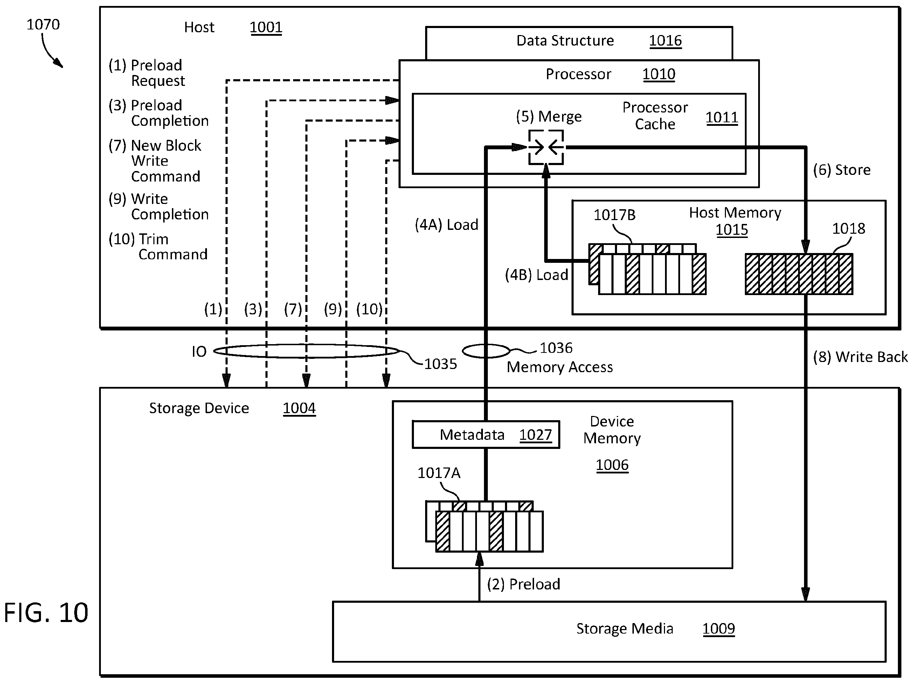

Fig. 10 illustrates some example implementation details for a second embodiment of a cleaning scheme for a data structure that may perform a merge operation based on a status of a portion of the data structure stored in a memory in accordance with example embodiments of the disclosure. The scheme 1070 illustrated in Fig. 10 may be implemented, for example, using any of the systems described herein including those illustrated in Fig. 1, Fig. 2, Fig. 3, and/or Fig. 7 in which similar elements may be indicated by reference numbers ending in, and/or containing, the same digits, letters, and/or the like. The scheme 1070 illustrates some possible implementation details that may be used in addition to, or as an alternative to, those used with the scheme 770 illustrated in Fig. 7.

Referring to Fig. 10, one or more hosts 1001 and one or more storage devices 1004 may communicate using one or more communication interfaces, techniques, protocols, and/or the like. For purposes of illustration, the scheme 1070 may be illustrated using a coherent interface such as CXL, a memory access technique that may implement, for example, CXL.mem 1036, and/or an IO technique that may implement, for example, CXL.io 1035, but other interfaces, techniques, protocols, and/or the like, may be used. Host 1001 may include one or more processors 1010 having one or more processor caches 1011, and a host memory 1015. Storage device 1004 may include storage media 1009 and/or device memory 1006. In some embodiments, a portion of device memory 1006 may be configured as a cache for memory access technique 1036. Host 1001 may be configured, for example, to implement a data structure 1016 such as segments in a file system, a merge tree in a database, and/or the like, which may be updated by storing valid (e.g., new) data to an unoccupied portion of memory and/or storage space in which the data structure may be stored.

A cleaning operation may include one or more of a preload request (1), a preload operation (2), a preload completion (3), a load operation (4) (which may include load operations (4A) and/or (4B)), a merge operation (5), a store operation (6), a new block write command (7), a write back operation (8), a write completion (9), a trim command (10), and/or other operations.

A prefetch request (1) may be sent from host 1001 to storage device 1004 to cause the storage device 1004 to perform a prefetch operation (2) in which storage device 1004 may load one or more old blocks 1017 from storage media 1009 to device memory 1006 (e.g., to a portion of device memory 1006 allocated as a cache for a memory access technique and/ or to access storage media 1009). One or more old blocks 1017 may include cold data that may have been written back to storage media 1009. Additionally, or alternatively, one or more old blocks 1017 may include hot data (e.g., that may have already been present in the device memory 1006).

Storage device 1004 may send a preload completion to host 1001 based on completing at least a portion of a preload operation of one or more old blocks 1017.

At load operation (4A), storage device 1004 may send one or more old blocks 1017A and/or metadata 1027 (e.g., for one or more old blocks 1017A) to processor cache 1011 for processor 1010 at host 1001 using a memory access technique that may implement CXL.mem and/or any other communication technique. In some embodiments, this may bypass, at least partially, host memory 1015. Moreover, in some embodiments, metadata 1027 may enable processor 1010 and/or storage device to avoid loading invalid data into processor 1010 which, depending on the implementation details, may reduce IO traffic. Additionally, or alternatively, at load operation (4B), host 1001 may load one or more old blocks 1017B and/or metadata for one or more old blocks 1017B from host memory 1015 to processor cache 1011. One or more old blocks 1017B may be located in host memory 1015, for example, because it may include information having a status of hot data.

Merge operation (5) may combine one or more portions of valid data (indicated with diagonal shading) in one or more old blocks 1017A and/or 1017B into one or more resulting new blocks 1018 in which valid data may be indicated by diagonal shading, and/or invalid data may be indicated without shading. Additionally, or alternatively, additional valid data for the data structure 1016 (e.g., new data) may be included (e.g., along with old data) in the one or more new blocks 1018. Additionally, or alternatively, merge operation (5) may combine metadata for one or more old blocks 1017A and/or 1017B. In some situations, the amount of space (e.g., the number of new blocks 1018) into which the portions of valid data may be combined may be smaller than the amount of space occupied by the old blocks 1017.

At store operation (6), one or more new blocks 1018 and/or metadata for one or more new blocks 1018 generated by merge operation (5) may be stored at least partially in host memory 1015. Storing one or more new blocks 1018 in host memory 1015 may be beneficial, for example, because it may contain hot data that may be likely to be accessed soon and therefore may reduce latency caused by loading the hot data from storage device 1004.

Processor 1010 may send a new block write command (7) to storage device 1004 to initiate write back operation (8) in which some or all of new blocks 1018 may be copied or moved from host memory 1015 to storage media 1009, for example, using a DMA operation. However, some or all of new blocks 1018, especially new blocks 1018 containing hot data, may be kept in host memory 1015, for example, until evicted based on a cache replacement policy. Storage device 1004 may send a copy completion (9) to host1001 based on completing at least a portion of write back operation (9).

In some embodiments, storage device 1004 may delete (e.g., trim) one or more (e.g., all) old blocks 1017 from device memory 1006 and/or storage media 1009, for example, based on receiving a trim command (10) from processor 1010. One or more old blocks 1017 may be deleted, for example, after one or more new blocks 1018 are written to storage media 1009 (e.g., at write back operation (9)) so the valid data may be recovered in the event of a power failure before a write back operation is completed.

Depending on the implementation details, performing a cleaning operation based at least partially on a status of a portion of a data (e.g., hot data) structure stored in a memory may reduce latency, for example, by retaining hot data in host memory. Additionally, or alternatively, the cleaning operation illustrated in Fig. 10 may reduce IO traffic, reduce power consumption, reduce latency for accessing one or more portions of the data structure 1016, for example, by preventing hot data in the host memory 1015 from being evicted by old (possibly cold) data for a cleaning operation, and/or the like.

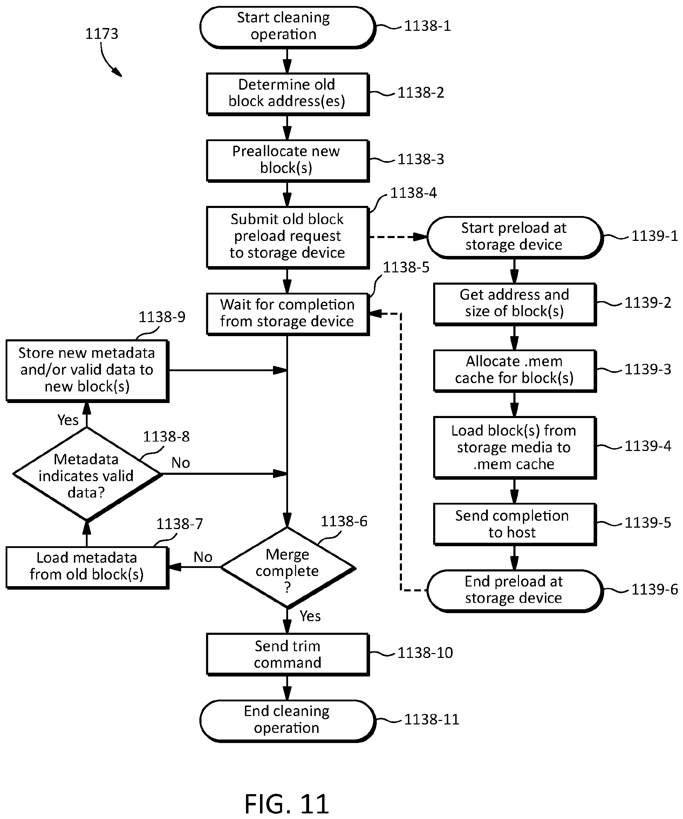

Fig. 11 illustrates an embodiment of a method to implement a cleaning operation using a memory access technique in accordance with example embodiments of the disclosure. For purposes of illustration, the method 1173 illustrated in Fig. 11 may be described in the context of the cleaning scheme 880 described with respect to Fig. 8. However, the method 1173 may also be used to implement, and/or may be implemented with, any of the cleaning operations disclosed herein, including, for example, any of those described with respect to Figs. 5-10. One or more operations of the method 1173 may be implemented, for example, with a processor 810 at a host 801, a device controller at a storage device 804, and/or the like.

Referring to Fig. 11, the method may begin at operation 1138-1 based, for example, on a determination by a host, storage device, and/or the like, that one or more old blocks 817 of a data structure 816 may contain invalid data. The one or more old blocks 817 that may contain invalid data may be located, for example, in storage media 809.

At operation 1138-2, the method may determine one or more addresses of one or more old blocks 817 that may contain invalid data. At operation 1138-3, the method may allocate (e.g., preallocate) memory and/or storage space for new blocks into which valid data in one or more old blocks 817 may be merged. For example, the method may allocate memory space in device memory 806.

At operation 1138-4, processor 810 may submit a preload request to storage device 804 and proceed to operation 1138-5 where the method may wait for storage device 804 to perform a preload operation. Additionally, or alternatively, the method may proceed from operation 1138-4 to operation 1139-1 where the method may start a preload operation 1139 at storage device 804.

At operation 1139-2, the method may determine one or more addresses and/or sizes of one or more old blocks 817 (e.g., that may contain invalid data) for data structure 816. At operation 1139-3, the method may allocate space in device memory 806 for a cache for a memory access technique that may implement, for example, CXL.mem. At operation 1139-4, the method may load one or more old blocks 817 from storage media 809 to the cache for the memory access technique in device memory 806. At operation 1139-5, the method may send, from storage device 804 to host 801 (e.g., to processor 810), a completion for the preload operation. At operation 1139-6, the method may end the preload operation 1139 and return to operation 1138-5.

From operation 1138-5, the method may proceed to operation 1138-6 at which the method may determine if a merge operation is completed. If the merge operation is not completed, the method may proceed to operation 1138-7 at which the method may load metadata for an old block 817. At operation 1138-8, if the metadata indicates that the old block does not include valid data, the method may return to operation 1138-6.

If, however, at operation 1138-8, the metadata indicates valid data in the old block, the method may proceed to operation 1138-9 at which the method may store valid data and/or new metadata for the valid data, to a new block 818 and return to operation 1138-6.

At operation 1138-6, if the method determines the merge operation is complete, the method may proceed to operation 1138-10 at which a host (e.g., by processor 810) may send a trim command to storage device 804 to delete (e.g., trim) one or more old blocks 817 from device memory 806 and/or storage media 809. The cleaning operation may then end operation 1138-11.

The embodiment illustrated in Fig. 11, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single components and/or operations, and/or some components and/or operations shown as single components and/or operations may be implemented with multiple components and/or operations.

Any of the functionality described herein, including any of the host functionality, device functionally, and/or the like, as well as any of the functionality described with respect to the embodiments illustrated in Figs. 1-11 may be implemented with hardware, software, firmware, or any combination thereof including, for example, hardware and/or software combinational logic, sequential logic, timers, counters, registers, state machines, volatile memories such DRAM and/or SRAM, nonvolatile memory including flash memory, persistent memory such as cross-gridded nonvolatile memory, memory with bulk resistance change, PCM, and/or the like and/or any combination thereof, complex programmable logic devices (CPLDs), FPGAs, ASICs, CPUs including CISC processors such as x86 processors and/or RISC processors such as ARM processors, GPUs, NPUs, TPUs, and/or the like, executing instructions stored in any type of memory. In some embodiments, one or more components may be implemented as a system-on-chip (SOC), a multi-chip module, one or more chiplets (e.g., integrated circuit (IC) dies) in a package, and/or the like.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

Since the inventive principles of this patent disclosure may be modified in arrangement and detail without departing from the inventive concepts, such changes and modifications are considered to fall within the scope of the following claims.

## Claims

1. A method comprising:
operating, by at least one processor, a data structure;
receiving, by the at least one processor, from a storage device, using a memory access technique, information for a modification operation for the data structure; and
performing, by the at least one processor, using the information, at least a portion of the modification operation.

2. The method of claim 1, wherein the modification operation comprises a cleaning operation.

3. The method of claim 1 or 2, wherein:
the information comprises one or more blocks of data; and
the performing comprises merging a first portion of the one or more blocks of data and a second portion of the one or more blocks of data.

4. The method of any one of claims 1 to 3, wherein the information comprises location information for one or more blocks of data.

5. The method of any one of claims 1 to 4, wherein:
the information comprises first information about one or more first blocks of data; and
the performing comprises determining, based on the first information, second information for one or more second blocks of data.

6. The method of any one of claims 1 to 5, wherein the performing comprises:
generating a result; and
transferring at least a portion of the result to the storage device.

7. The method of any one of claims 1 to 6, further comprising:
sending, from the at least one processor to the storage device, a fetch request; and
loading, at the storage device, based on the fetch request, at least a portion of the information from a storage medium to a memory.

8. A method comprising:
operating, by at least one processor, a data structure;
sending, from the at least one processor, to a storage device, information for a modification operation for the data structure; and
performing, by the storage device, using the information, at least a portion of the modification operation.

9. The method of claim 8, wherein the modification operation comprises a cleaning operation.

10. The method of claim 8 or 9, wherein the information for the modification operation comprises at least one of location information, data size information, or valid data information.

11. The method of any one of claims 8 to 10, wherein:
the data structure comprises one or more blocks of data; and
the performing at least a portion of the modification operation comprises merging a first portion of the one or more blocks of data and a second portion of the one or more blocks of data.

12. The method of any one of claims 8 to 11, wherein the information comprises first information about one or more blocks of data, the method further comprising:
sending, from the storage device to the at least one processor, second information about one or more blocks of data; and
generating, by the at least one processor, based on the second information, the first information.

13. The method of any one of claims 8 to 12, wherein the information comprises destination information for one or more blocks of merged data, the method further comprising:
sending, from the storage device to the at least one processor, source information for one or more blocks of data stored at the storage device; and
generating, by the at least one processor, based on the source information, the destination information.

14. The method of any one of claims 8 to 13, wherein the data structure comprises one or more blocks of data, the method further comprising:
sending, from the at least one processor to the storage device, a fetch request;
loading, at the storage device, based on the fetch request, from a storage medium to a memory, at least a portion of the one or more blocks of data; and
performing the at least a portion of the modification operation on the at least a portion of the one or more blocks of data in the memory.

15. The method of claim 1, comprising
operating, by a processor at a host, the data structure;
storing, by the processor, in a memory at the host, based on a status of a portion of the data structure, the portion of the data structure;
receiving, by the processor at the host, from the storage device, information for the modification operation for the data structure; and
performing, by the processor at the host, using the information and the portion of the data structure, at least the portion of the modification operation.
